(19) Europäisches Patentamt / European Patent Office / Office européen des brevets

(11) **EP 1 245 966 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(51) Int Cl.:
***G01S 13/526*** *(2006.01)*

(21) Anmeldenummer: **02004446.7**

(22) Anmeldetag: **27.02.2002**

(54) **Verfahren und Vorrichtung zur Detektion von Objekten in Entfernungszellen mittels Radarsignalen**

Method and apparatus for the detection of objects within range cells by means of radar signals

Procédé et dispositif pour la détection d'objects à l'intérieur de cellules distance au moyen de signaux radar

(84) Benannte Vertragsstaaten:
**DE ES FR GB IT**

(30) Priorität: **29.03.2001 DE 10115607**

(43) Veröffentlichungstag der Anmeldung:
**02.10.2002 Patentblatt 2002/40**

(73) Patentinhaber: **Valeo Schalter und Sensoren GmbH**
**74321 Bietigheim-Bissingen (DE)**

(72) Erfinder:
• **Reiche, Martin**
**74321 Bietigheim-Bissingen (DE)**
• **Brandt, Timo**
**74074 Heilbronn (DE)**

(74) Vertreter: **Pothmann, Karsten et al**
**Valeo Schalter und Sensoren GmbH**
**74319 Bietigheim-Bissingen (DE)**

(56) Entgegenhaltungen:
EP-A- 0 031 752    EP-A- 1 048 960
FR-A- 2 550 347    US-A- 4 965 584

**Beschreibung**

Die vorliegende Erfindung betrifft ein Verfahren und eine Vorrichtung zur Detektion von Objekten in Entfernungszellen durch Abtastung der Entfernungszellen mittels gepulster Radarsignale. Die Radarsignale werden in Richtung der Entfernungszellen ausgesandt und von den Objekten zumindest teilweise reflektiert. Die reflektierten Radarsignale werden empfangen und ausgewertet. Die empfangenen Signale werden im Rahmen der Auswertung zur Unterdrückung feststehender Objekte einer Filterung unterzogen.

Die Erfindung betrifft außerdem ein digitales Filter zum Einsatz in einer derartigen Vorrichtung. Das digitale Filter filtert die empfangenen Radarsignale zur Unterdrückung von Objekten mit einer Relativgeschwindigkeit von Null.

Des weiteren betrifft die vorliegende Erfindung auch ein Speicherelement, auf dem ein Computerprogramm abgespeichert ist, das auf einem Rechengerät, insbesondere auf einem Mikroprozessor oder auf einem digitalen Signalprozessor (DSP), ablauffähig ist.

Schließlich betrifft die vorliegende Erfindung auch ein Computerprogramm, das auf einem Rechengerät, insbesondere auf einem Mikroprozessor oder auf einem digitalen Signalprozessor (DSP), ablauffähig ist.

Vorrichtungen der eingangs genannten Art sind aus dem Stand der Technik als sog. Equivalent-Time-Sampling (ETS)-Pulsradargeräte bekannt. ETS-Pulsradargeräte werden zur Detektion von Objekten in Entfernungszellen bspw. als Einparkhilfe in einem Kraftfahrzeug eingesetzt. Dabei werden die Entfernungszellen mittels Radarsignalen abgetastet. Ein ETS-Radargerät sendet Radarsignale in Richtung der Entfernungszellen aus. Zumindest ein Teil der ausgesandten Radarsignale werden an den Objekten in den Entfernungszellen reflektiert. Die reflektierten Radarsignale werden von dem ETS-Pulsradargerät empfangen und ausgewertet. Mit einem ETS-Pulsradargerät kann anhand der Laufzeit der Radarsignale von ihrer Aussendung bis zum Empfang von an einem Objekt reflektierten Signalen der Abstand zu dem Objekt ermittelt werden.

Ein ETS-Pulsradargerät steuert ein internes variables Totzeitglied über die Zeit an und transferiert dadurch die Laufzeit möglicher reflektierter Signale in eine äquivalente Zeitachse. Dieses Prinzip ist bereits in einer deutschen Patentanmeldung DE 199 19 227 derselben Anmelderin ausführlich beschrieben worden. Auf diese Anmeldung wird ausdrücklich

Bezug genommen.

Im Rahmen der Auswertung werden die empfangenen Signale zur Unterdrückung feststehender Objekte auch einer Filterung unterzogen. Ein ortsfestes Objekt ist bspw. eine wellige oder unregelmäßige Fahrbahnoberfläche, an der ausgesandte Radarsignale reflektiert und als Störsignale von dem ETS-Pulsradargerät empfangen werden. Diese Störsignale werden durch die Filterung eliminiert bzw. stark gedämpft. Zur Filterung wird nach dem Stand der Technik bspw. ein digitales Moving Target Indication (MTI)-Filter eingesetzt. Durch das MTI-Filter werden Signale, die von einem Objekt reflektiert werden, das sich mit einer Relativgeschwindigkeit unterhalb einer vorgebbaren Mindestgeschwindigkeit bewegt eliminiert bzw. gedämpft.

In Abhängigkeit von einer Trägerfrequenz f_träger des Radarsignals erzeugt ein sich radial bewegendes Objekt eine zu der Radialgeschwindigkeit V_objekt proportionale Dopplerfrequenz

$$f\_doppler = 2 * f\_träger * V\_objekt/c,$$

wobei mit c die Lichtgeschwindigkeit bezeichnet ist. Durch das MTI-Filter werden Objekte mit Dopplerfrequenzen unterhalb einer vorgebbaren der Mindestgeschwindigkeit entsprechenden Mindestfrequenz gedämpft. Das bedeutet, dass ein Objekt die Mindestgeschwindigkeit überschreiten muss, um in den Durchlassbereich des MTI-Filters zu gelangen.

Ein digitales MTI-Filter ist aufgrund des Abtasttheorems kein idealer Hochpass. Eine Dämpfung der empfangenen Signale bei feststehenden Objekten (V_objekt = 0) durch das Filter ist gewünscht. Die Übertragungsfunktion des Filters wiederholt sich jedoch periodisch mit dem Kehrwert der Totzeit des Filters. Der Sperrbereich taucht bei einer Blindfrequenz f_blind = n/T periodisch auf. Im Bereich dieser Blindfrequenzen ergeben sich sog. Blindgeschwindigkeiten, bei Objektgeschwindigkeiten

$$V\_objekt = n * f\_blind * c / (2 * f\_träger),$$

wobei n eine ganze Zahl zwischen 0 und Unendlich ist. Eine Dämpfung der empfangenen Signale im Bereich der Blindgeschwindigkeiten durch das Filter ist unerwünscht, ergibt sich aber bei einer digitalen Realisierung des Filters zwangsläufig. Objekte, die sich mit diesen Blindgeschwindigkeiten radial zu dem ETS-Pulsradargerät bewegen, werden also nicht detektiert, da die entsprechenden reflektierten und empfangenen Signale von dem digitalen MTI-Filter eliminiert bzw. gedämpft werden. Dadurch können sich Probleme bei der Zuverlässigkeit der Detektion von bewegten Objekten in den Entfernungszellen ergeben.

Der vorliegenden Erfindung liegt deshalb die Aufgabe zugrunde die Zuverlässigkeit der Detektion von Objekten in den Entfernungszellen zu erhöhen.

Zur Lösung dieser Aufgabe schlägt die Erfindung ausgehend von dem Verfahren zur Detektion von Objekten in Entfernungszellen durch Abtastung der Entfernungszellen mittels Radarsignalen der eingangs genannten Art vor, dass die empfangenen Signale einer digitalen Filterung mit variablen Totzeiten unterzogen werden.

Die Blindfrequenzen des digitalen Filters können erfindungsgemäß in Bereiche der Dopplerfrequenz bzw. in Bereiche der Relativgeschwindigkeit eines Objekts verschoben werden, die für die Detektion des Objekts uninteressant oder weniger wichtig sind. Die Blindfrequenz kann durch Wahl einer angemessenen Filtertotzeit T zu einer Relativgeschwindigkeit hin verschoben werden, mit der sich ein Objekt höchstwahrscheinlich nicht bewegen wird. Die Blindfrequenz kann bspw. aber auch zu einer Relativgeschwindigkeit hin verschoben werden, bei der eine nicht erfolgte Detektion eines sich mit dieser Relativgeschwindigkeit bewegenden Objekts keine bzw. kaum Auswirkungen auf die Detektionszuverlässigkeit hat. Das ist bspw. bei Relativgeschwindigkeiten der Fall, die so gering sind, dass die Kollisionszeit die maximale Reaktionszeit überschreitet, oder die so groß sind, dass die Kollisionszeit die minimale Reaktionszeit unterschreitet.

Gemäß einer vorteilhaften Weiterbildung der vorliegenden Erfindung wird vorgeschlagen, dass die Blindfrequenzen des digitalen Filters in Abhängigkeit von der Entfernung detektierter Objekte variiert wird.

Der Weiterbildung der vorliegenden Erfindung liegen zwei Überlegungen zugrunde. Zum einen kann davon ausgegangen werden, dass ein Fahrzeugführer ein sich seinem Fahrzeug mit einer geringen Relativgeschwindigkeit näherndes Objekt innerhalb einer maximalen Reaktionszeit erkennt und zur Detektion solcher Objekte nicht auf das Verfahren zur Detektion von Objekten in den Entfernungszellen angewiesen ist. Im Extremfall bedeutet dies, dass Objekte mit einer Relativgeschwindigkeit von Null eine Kollisionszeit von Unendlich aufweisen und somit unterdrückt werden dürfen. Bei Annahme einer konstanten maximalen Reaktionszeit steigt die maximal akzeptable Blindgeschwindigkeit proportional zur Entfernung des Objekts, die wiederum der unteren maximalen Grenzfrequenz eines digitalen Bandpassfilters entspricht.

Die andere Überlegung betrifft die minimale Reaktionszeit des Fahrzeugführers. Objekte, die eine über die Entfernung ansteigende radiale Relativgeschwindigkeit aufweisen, haben eine Kollisionszeit, die die Reaktionszeit des Fahrzeugführers unterschreitet und somit zwangsläufig zur Kollision mit dem Fahrzeug führen.

Das digitale Filter sollte nun derart ausgelegt werden, dass die erste Blindgeschwindigkeit über die Entfernung die Reaktionszeit des Fahrzeugführers möglichst unterschreitet (d.h. V_blind > s_objekt / T_reaktion_min).

Gemäß einer bevorzugten Ausführungsform der vorliegenden Erfindung wird vorgeschlagen, dass die Blindfrequenzen mit zunehmender Entfernung der detektierten Objekte ansteigend gewählt werden.

Alternativ wird vorgeschlagen, dass die Blindfrequenzen mit zunehmender Entfernung der detektierten Objekte bis zum Erreichen eines vorgebbaren Entfernungswertes ansteigend und nach dem Verstreichen einer vorgebbaren Totzeit wieder abfallend gewählt werden.

Vorteilhafterweise werden die Blindfrequenzen trapezförmig ansteigend und abfallend gewählt. Wenn die Entfernungszellen trapezförmig abgetastet werden, ergibt sich zwischen den Abtastwerten der ansteigenden und der abfallenden Trapezflanke über die gleiche Entfernungszelle eine mit der Entfernung proportional abfallende Totzeit.

Gemäß einer anderen vorteilhaften Weiterbildung der vorliegenden Erfindung wird vorgeschlagen, dass bei mehreren sequenziell aufeinanderfolgenden jeweils ansteigenden und wieder abfallenden Eckfrequenzen die jeweiligen Totzeiten unterschiedlich gewählt werden und die Übertragungsfunktionen der entsprechenden Filter durch eine Funktion zur Ermittlung des Maximalwerts der Übertragungsfunktionen überlagert werden. Durch eine geschickte Wahl der Totzeiten und eine Maximalwertbildung der Übertragungsfunktionen kann ein digitales Filter mit einer resultierenden Übertragungsfunktion modelliert werden, die im Bereich der Blindgeschwindigkeiten keine bzw. nur eine geringfügige Dämpfung der empfangenen Signale bewirkt.

Einen guten Kompromiß bezüglich Elimination der Dämpfung im Bereich der Blindgeschwindigkeiten einerseits und geringem Aufwand zur Realisierung und akzeptablem Systemdurchsatz andererseits kann dadurch erzielt werden, dass gemäß einer weiteren bevorzugten Ausführungsform der vorliegenden Erfindung bei drei sequenziell aufeinanderfolgenden jeweils ansteigenden und wieder abfallenden Eckfrequenzen die jeweiligen Totzeiten unterschiedlich gewählt werden und die Übertragungsfunktionen der entsprechenden Filter durch eine Funktion zur Ermittlung des Maximalwerts der Übertragungsfunktionen überlagert werden.

Es wird des weiteren vorgeschlagen, dass bei mehreren sequenziell aufeinanderfolgenden jeweils ansteigenden und wieder abfallenden Eckfrequenzen die jeweiligen Totzeiten in einem derartigen Verhältnis zueinander gewählt werden, dass Zähler und Nenner des Verhältnisses Primzahlen oder Vielfache von Primzahlen sind. Vorteilhafterweise werden die jeweiligen Totzeiten derart gewählt, dass in einer Reihe unmittelbar aufeinanderfolgender Primzahlen zwischen der der längsten Totzeit entsprechenden Primzahl und der der nächst niedrigeren Totzeit entsprechenden Primzahl mindestens eine weitere Primzahl liegt. Auf diese Weise kann die Dämpfung der empfangenen Signale im Bereich der Blindgeschwindigkeiten im Mittel auf einen sehr kleinen Wert reduziert werden.

Als eine weitere Lösung der Aufgabe der vorliegenden Erfindung wird eine Vorrichtung zur Detektion von Objekten in Entfernungszellen gemäß Patentanspruch 10 angegeben.

Als noch eine weitere Lösung der Aufgabe der vorliegenden Erfindung wird ein digitales Filter gemäß Patentanspruch 11 angegeben.

Von besonderer Bedeutung ist die Realisierung des erfindungsgemäßen Verfahrens in der Form eines Speicherelements. Dabei ist auf dem Speicherelement ein Computerprogramm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt wie das Verfahren, zu dessen Ausführung das Computerprogramm geeignet ist.

Die Erfindung betrifft schließlich auch ein Computerprogramm, das zur Ausführung des erfindungsgemäßen Verfahrens geeignet ist, wenn es auf einem Rechengerät, insbesondere auf einem Mikroprozessor, abläuft. Besonders bevorzugt ist dabei, wenn das Computerprogramm auf einem Speicherelement abgespeichert ist.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Es zeigen:

Figur 1    eine Übertragungsfunktion eines erfindungsgemäßen digitalen Filters;

Figur 2    eine Übertragungsfunktion eines aus dem Stand der Technik bekannten digitalen Filters;

Figur 3    minimale und maximale Blindgeschwindigkeiten eines Objekts in Abhängigkeit von der Entfernung zu dem Objekt;

Figur 4    minimale und maximale Eckfrequenzen eines erfindungsgemäßen digitalen Filters in Abhängigkeit von der Entfernung zu einem Objekt;

Figur 5    ein Sweepsignal zur Abtastung einer Entfernungszelle; und

Figur 6    Übertragungsfunktionen eines erfindungsgemäßen digitalen Filters für verschiedene Entfernungen zu einem Objekt.

Aus dem Stand der Technik sind sog. Equivalent-Time-Sampling (ETS)-Pulsradargeräte bekannt. ETS-Pulsradargeräte werden zur Detektion von Objekten in Entfernungszellen bspw. als Einparkhilfe in einem Kraftfahrzeug eingesetzt. Ein typischer Sweep eines aus dem Stand der Technik bekannten ETS-Pulsradargeräts über einen Detektionsbereich von 0 bis 10 Meter weist bspw. eine Rampe von 5 Millisekunden Dauer auf, mit der der Detektionsbereich linear überstrichen wird. Damit ergibt sich eine konstante Sweepgeschwindigkeit V_sweep = 10m * 1/5ms = 2000 m/s.

Im Rahmen der Auswertung werden die empfangenen Signale zur Unterdrückung feststehender Objekte auch einer Filterung mittels eines sog. Moving Target Indication (MTI)-Filters unterzogen.

MTI-Filter werden üblicherweise durch eine Verknüpfung von sequenziell gewonnenen Daten in einer Software implementiert. Die Daten werden dabei in der Regel mit einer festen Abtastrate 1/T eingelesen. Die Übertragungsfunktion eines einstufigen MTI-Filters lautet $H(z) = 1 - z^{-1}$. Ersetzt man z durch $\exp(j2\pi fT)$, wobei T die Abtastzeit ist, kann man die Übertragungsfunktion H(f) generieren. Der Betrag der Übertragungsfunktion ist durch die Funktion $|H(f)| = 2*|\sin(\pi fT)|$ gegeben. Eine Verkettung mehrerer MTI-Stufen entspricht einer entsprechenden Potenzierung der Übertragungsfunktion. Diese ist maßgeblich von der Abtastzeit T geprägt.

Ein digitales MTI-Filter ist aufgrund des Abtasttheorems kein idealer Hochpass bzw. Bandpass. Eine Dämpfung der empfangenen Signale bei feststehenden Objekten (V_objekt = 0) durch das Filter ist gewünscht. Die Übertragungsfunktion des Filters wiederholt sich jedoch periodisch mit dem Kehrwert der Totzeit des Filters. Das Filter weist somit bei den Vielfachen der Abtastrate (1/T) feste Eckfrequenzen auf. Im Bereich dieser Eckfrequenzen ergeben sich sog. Blindgeschwindigkeiten. Eine Dämpfung der empfangenen Signale im Bereich der Blindgeschwindigkeiten durch das Filter ist unerwünscht, ergibt sich aber bei einer digitalen Realisierung des Filters zwangsläufig. Objekte, die sich mit diesen Blindgeschwindigkeiten radial zu dem ETS-Pulsradargerät bewegen, werden also nicht detektiert.

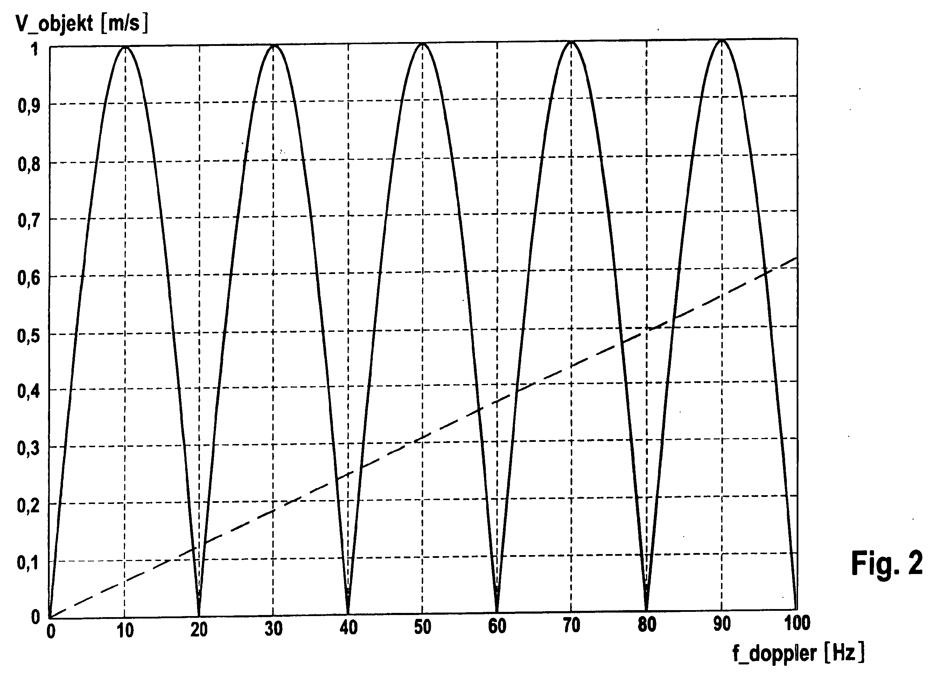

Eine Übertragungsfunktion eines aus dem Stand der Technik bekannten MTI-Filters ist in Figur 2 dargestellt. In diesem Beispiel wird eine Entfernungszelle mit einer Sweeprampe von T = 50 ms abgetastet. Identische Entfernungszellen werden also mit einer konstanten Abtastrate von 50ms eingelesen und ausgewertet. In Abhängigkeit von der Trägerfrequenz, in diesem Beispiel f_träger = 24 GHz, erzeugt ein sich radial bewegendes Objekt eine zu der Radialgeschwindigkeit proportionale Dopplerfrequenz f_doppler. Die Geschwindigkeit V_objekt des Objekts ist über die Frequenz f_doppler in Figur 2 als gestrichelte Linie dargestellt. Anhand des Filterverlaufs erkennt man, dass Objekte mit

Dopplerfrequenzen f_doppler unterhalb 3,33 Hz mit mindestens 6 dB gedämpft werden. Dies entspricht einer Mindestgeschwindigkeit von 0,02 m/s, die ein Objekt überschreiten muss, um in den Durchlassbereich des Filters zu gelangen. Es ist deutlich zu erkennen, dass das Filter bei den Vielfachen der Abtastrate (1/T = 1/50ms = 20Hz) feste Eckfrequenzen aufweist. Blindgeschwindigkeiten ergeben sich bei

$$V\_objekt = n * f\_doppler * c / (2 * f\_träger)$$

$$= n * 20Hz * 3*10^8 / (2 * 24 \text{ GHz})$$

$$= n * 0,125 \text{ m/s}$$

wobei n eine ganze Zahl zwischen 1 und Unendlich ist.

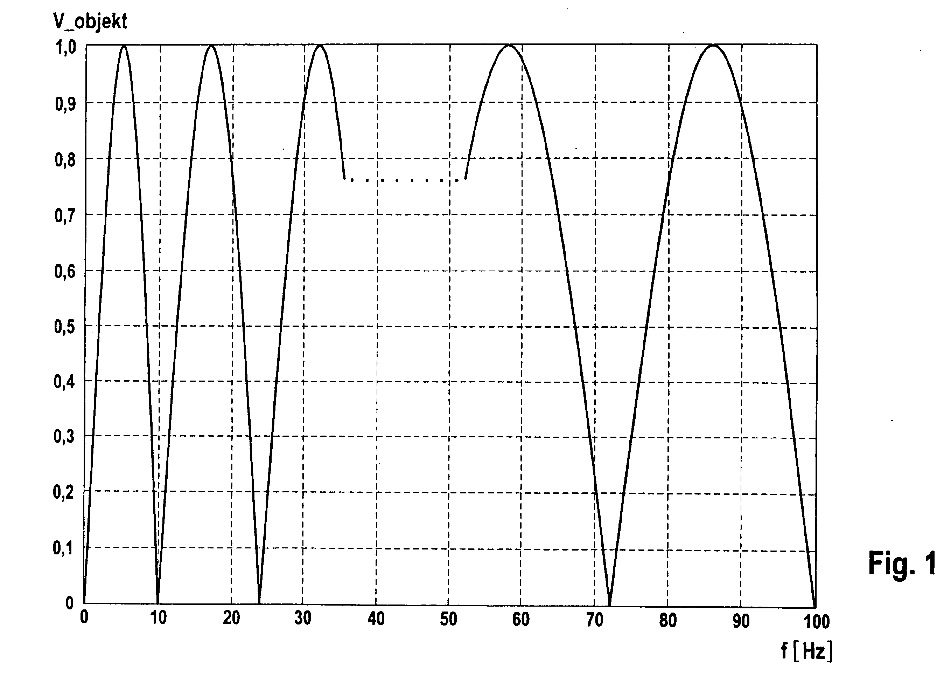

Bei dem digitalen Filter gemäß der vorliegenden Erfindung können die Eckfrequenzen in Bereiche der Dopplerfrequenz f_doppler bzw. in Bereiche der Relativgeschwindigkeit V_objekt eines Objekts verschoben werden, die für die Detektion des Objekts uninteressant oder weniger wichtig sind. Eine Übertragungsfunktion eines erfindungsgemäßen Filters ist in Figur 1 dargestellt. Es ist deutlich zu erkennen, dass das Filter keine festen sondern vielmehr variable Eckfrequenzen aufweist.

Es ist insbesondere daran gedacht, die Eckfrequenzen in Abhängigkeit von der Entfernung s detektierter Objekte zu variieren. Diesem Gedanken liegen zwei Überlegungen zugrunde. Zum einen kann davon ausgegangen werden, dass ein Fahrzeugführer ein sich seinem Fahrzeug mit einer geringen Relativgeschwindigkeit näherndes Objekt innerhalb einer maximalen Reaktionszeit erkennt und zur Detektion solcher Objekte nicht auf das Verfahren zur Detektion von Objekten in den Entfernungszellen angewiesen ist. Im Extremfall bedeutet dies, dass Objekte mit einer Relativgeschwindigkeit von Null eine Kollisionszeit von Unendlich aufweisen und somit unterdrückt werden dürfen. Bei Annahme einer konstanten maximalen Reaktionszeit steigt die maximal akzeptable Blindgeschwindigkeit proportional zur Entfernung des Objekts, die wiederum der unteren maximalen Grenzfrequenz eines digitalen Bandpassfilters entspricht.

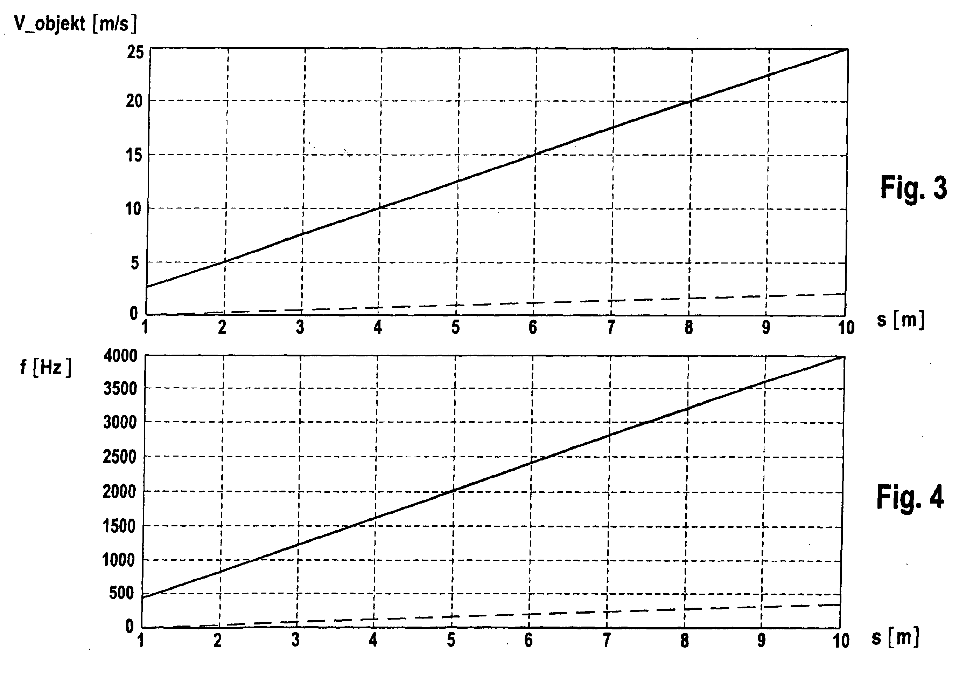

Die andere Überlegung betrifft die minimale Reaktionszeit des Fahrzeugführers. Objekte, die eine über die Entfernung ansteigende radiale Relativgeschwindigkeit aufweisen, haben eine Kollisionszeit, die die Reaktionszeit des Fahrzeugführers unterschreitet und somit zwangsläufig zur Kollision mit dem Fahrzeug führen. Die maximale Blindgeschwindigkeit (durchgezogene Linie) und die minimale Blindgeschwindigkeit (gestrichelte Linie) eines Objekts sind in Figur 3 dargestellt. In Figur 4 ist die maximale Dopplerfrequenz (durchgezogene Linie) und die minimale Dopplerfrequenz (gestrichelte Linie) eines Objekts dargestellt.

Das erfindungsgemäße digitale Filter wird derart ausgelegt, dass die erste Blindgeschwindigkeit über die Entfernung die Reaktionszeit des Fahrzeugführers möglichst unterschreitet.

Die Figur 4 entnehmbaren Eckfrequenzen werden in Filtertotzeiten umgerechnet. Dabei gibt die Mindestfrequenz (gestrichelte Linie) eine Mindesttotzeit vor, die von dem MTI-Filter nicht unterschritten werden sollte. Zu der ersten Blindfrequenz (durchgezogene Linie), die größer als die zugehörige Mindestfrequenz ist (die Mindestfrequenz entspricht der unteren 6 dB-Eckfrequenz, die erste Blindfrequenz der oberen 6 dB-Eckfrequenz des untersten Bandpasses des periodischen MTI-Filterspektrums), gehört folglich eine Maximaltotzeit, die von dem MTI-Filter nicht überschritten werden sollte.

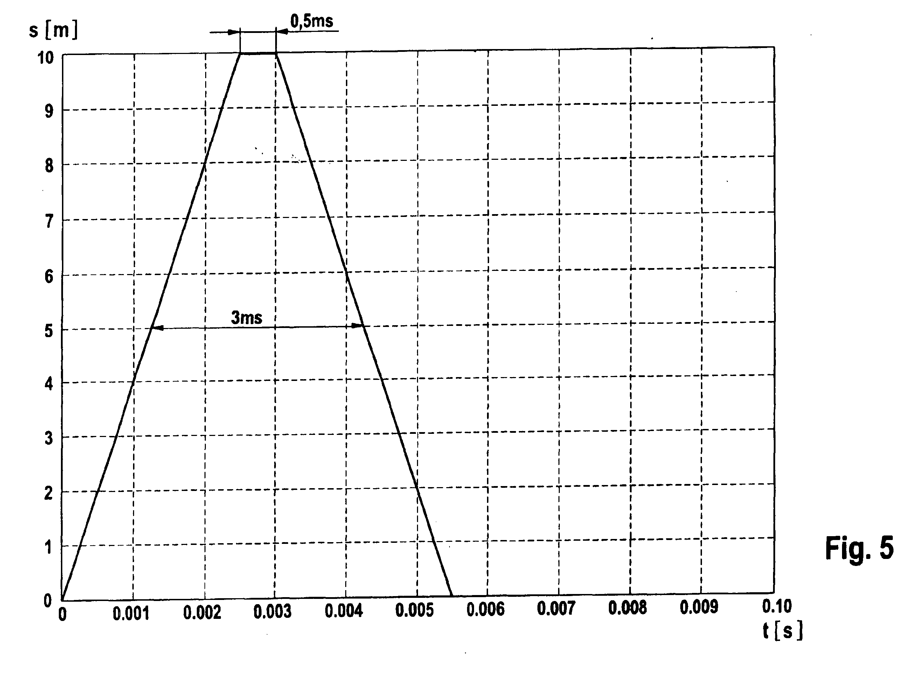

In Figur 5 ist ein Sweeptrapez dargestellt, mit dem die Entfernungszellen gemäß einer bevorzugten Ausführungsform der vorliegenden Erfindung abgetastet werden. Zwischen den Abtastwerten der ansteigenden und der abfallenden Sweepflanken ergeben sich über die gleiche Entfernungszelle eine mit der Entfernung proportional abfallende Totzeit. Für eine Entfernungszelle bei 5m ergibt sich bspw. eine Totzeit von 3ms und für eine Entfernungszelle bei 10m eine Totzeit von 0,5ms.

Gemäß einer weiteren Ausführungsform der vorliegenden Erfindung wird vorgeschlagen, bei mehreren sequenziell aufeinanderfolgenden Sweeptrapezen die jeweiligen Totzeiten unterschiedlich zu wählen und dann den Maximalwert der Übertragungsfunktionen der entsprechenden Filter zu bestimmen. Die Auswertung mehrerer sequenziell aufeinanderfolgender Sweeptrapeze wird also miteinander durch ein binäres OR verknüpft. In einem Ausführungsbeispiel werden dabei drei Trapeze vorgesehen, die unterschiedliche Trapezhaltezeiten aufweisen, z.B. 0,5ms; 0,75ms und 1,75ms. Die Trapezhaltezeiten stehen in einem Verhältnis von 7:3 bzw. von 7:2 zueinander, wobei 2, 3 und 7 Primzahlen sind. In einer Reihe unmittelbar aufeinanderfolgender Primzahlen (1, 2, 3, 5, 7, 11, ...) liegt zwischen der der längsten Totzeit entsprechenden Primzahl 7 und der der nächst niedrigeren Totzeit entsprechenden Primzahl 3 mindestens eine weitere Primzahl, nämlich 5. Es hat sich gezeigt, dass sich mit derart gewählten Trapezhaltezeiten besonders gute Ergebnisse erzielen lassen.

Überlagert man die Filterfunktionen der drei Trapeze durch eine Funktion zur Ermittlung des Maximalwerts, zeigt sich, dass für den entfernteren Messbereich die Blindgeschwindigkeiten größtenteils eliminiert werden.

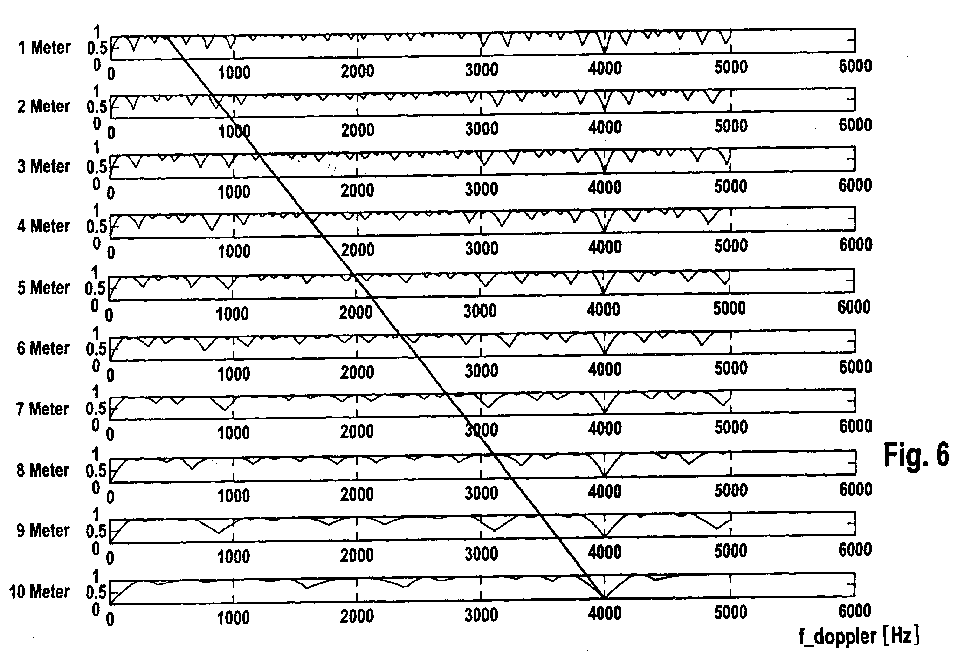

Kleinere Blindgeschwindigkeiten schlagen noch teilweise mit einer Dämpfung von etwa 10 dB für den nahen Messbereich durch. Die Übertragungsfunktionen derart überlagerter Filterfunktionen sind für verschiedene Entfernungsbereiche in Figur 6 dargestellt. Der Bereich links von der eingezeichneten diagonalen Linie ist dabei laut Spezifikation von Interesse, der Bereich rechts der Linie kann vernachlässigt werden. Man kann die Staffelung verschiedener Trapeze weiter fortsetzen, allerdings auf Kosten des Systemdurchsatzes.

**Patentansprüche**

1. Verfahren zur Detektion von Objekten in Entfernungszellen durch Abtastung der Entfernungszellen mittels gepulster Radarsignale, die in Richtung der Entfernungszellen ausgesandt, von den Objekten zumindest teilweise reflektiert, empfangen und ausgewertet werden, wobei die empfangenen Signale im Rahmen der Auswertung zur Unterdrückung feststehender Objekte einer Filterung unterzogen werden, **dadurch gekennzeichnet, dass** die empfangenen Signale einer digitalen Filterung mit variablen Totzeiten unterzogen werden.

2. Verfahren nach Anspruch 1, **dadurch gekennzeichnet, dass** Blindfrequenzen der digitalen Filterung in Abhängigkeit von der Entfernung detektierter Objekte variiert werden.

3. Verfahren nach Anspruch 2, **dadurch gekennzeichnet, dass** die Blindfrequenzen mit zunehmender Entfernung der detektierten Objekte ansteigend gewählt werden.

4. Verfahren nach Anspruch 2, **dadurch gekennzeichnet, dass** die Blindfrequenzen mit zunehmender Entfernung der detektierten Objekte bis zum Erreichen eines vorgebbaren Entfernungswertes ansteigend und nach dem Verstreichen einer vorgebbaren Totzeit wieder abfallend gewählt werden.

5. Verfahren nach Anspruch 4, **dadurch gekennzeichnet, dass** die Blindfrequenzen trapezförmig ansteigend und abfallend gewählt werden.

6. Verfahren nach Anspruch 4 oder 5, **dadurch gekennzeichnet, dass** bei mehreren sequenziell aufeinanderfolgenden jeweils ansteigenden und wieder abfallenden Blindfrequenzen die jeweiligen Totzeiten unterschiedlich gewählt werden und die Übertragungsfunktionen der entsprechenden Filter durch eine Funktion zur Ermittlung des Maximalwerts der Übertragungsfunktionen überlagert werden.

7. Verfahren nach Anspruch 6, **dadurch gekennzeichnet, dass** bei drei sequenziell aufeinanderfolgenden jeweils ansteigenden und wieder abfallenden Blindfrequenzen die jeweiligen Totzeiten unterschiedlich gewählt werden und die Übertragungsfunktionen der entsprechenden Filter durch eine Funktion zur Ermittlung des Maximalwerts der Übertragungsfunktionen überlagert werden.

8. Verfahren nach Anspruch 6 oder 7, **dadurch gekennzeichnet, dass** die jeweiligen Totzeiten in einem derartigen Verhältnis zueinander gewählt werden, dass Zähler und Nenner des Verhältnisses Primzahlen oder Vielfache von Primzahlen sind.

9. Verfahren nach Anspruch 8, **dadurch gekennzeichnet, dass** die jeweiligen Totzeiten derart gewählt werden, dass in einer Reihe unmittelbar aufeinanderfolgender Primzahlen zwischen der der längsten Totzeit entsprechenden Primzahl und der der nächst niedrigeren Totzeit entsprechenden Primzahl mindestens eine weitere Primzahl liegt.

10. Vorrichtung zur Detektion von Objekten in Entfernungszellen durch Abtastung der Entfernungszellen mittels Radarsignalen, die mittels eines Pulsradargeräts, insbesondere eines Equivalent-Time-Sampling, ETS, Pulsradargeräts, in Richtung der Entfernungszellen ausgesandt, von den Objekten zumindest teilweise reflektiert, mittels des Pulsradargeräts empfangen und ausgewertet werden, wobei die Vorrichtung ein digitales Filter zur Filterung der empfangenen Signale im Rahmen der Auswertung zur Unterdrückung feststehender Objekte aufweist, **dadurch gekennzeichnet, dass** das digitale Filter eine variable Totzeit hat.

11. Digitales Filter zum Einsatz in einer Vorrichtung zur Detektion von Objekten in Entfernungszellen durch Abtastung der Entfernungszellen mittels Radarsignalen, die mittels eines Pulsradargeräts, insbesondere eines Equivalent-Time-Sampling, ETS, Pulsradargeräts, in Richtung der Entfernungszellen ausgesandt, von den Objekten zumindest teilweise reflektiert, mittels des Pulsradargeräts empfangen und ausgewertet werden, wobei das digitale Filter die empfangenen Signale im Rahmen der Auswertung zur Unterdrückung feststehender Objekte filtert, **dadurch ge-**

**kennzeichnet, dass** das digitale Filter eine variable Totzeit hat.

12. Speicherelement, auf dem ein Computerprogramm abgespeichert ist, das auf einem Rechengerät, insbesondere auf einem Mikroprozessor oder auf einem digitalen Signalprozessor (DSP), ablauffähig und zur Ausführung eines Verfahrens nach einem der Ansprüche 1 bis 9 geeignet ist.

13. Computerprogramm, **dadurch gekennzeichnet, dass** das Computerprogramm zur Ausführung eines Verfahrens nach einem der Ansprüche 1 bis 9 geeignet ist, wenn es auf einem Rechengerät, insbesondere auf einem Mikroprozessor oder auf einem digitalen Signalprozessor (DSP), abläuft.

14. Computerprogramm nach Anspruch 13, **dadurch gekennzeichnet, dass** das Computerprogramm auf einem Speicherelement abgespeichert ist.

**Claims**

1. Method for the detection of objects within range cells by scanning the range cells by means of pulsed radar signals which are emitted in the direction of the range cells, are at least partially reflected by the objects, and are received and evaluated, the received signals being subjected to filtering as part of the evaluation in order to suppress stationary objects, **characterized in that** the received signals are subjected to digital filtering with variable delays.

2. Method according to Claim 1, **characterized in that** blind frequencies of the digital filtering are varied on the basis of the distance from detected objects.

3. Method according to Claim 2, **characterized in that** the blind frequencies are selected to rise with increasing distance from the detected objects.

4. Method according to Claim 2, **characterized in that** the blind frequencies are selected to rise with increasing distance from the detected objects until a predefinable distance value is reached and are selected to fall again after a predefinable delay has elapsed.

5. Method according to Claim 4, **characterized in that** the blind frequencies are selected to rise and fall in a trapezoidal manner.

6. Method according to Claim 4 or 5, **characterized in that**, in the case of a plurality of blind frequencies which sequentially follow one another and each rise and fall again, the respective delays are selected differently and a function for determining the maximum value of the transfer functions is superimposed on the transfer functions of the corresponding filters.

7. Method according to Claim 6, **characterized in that**, in the case of three blind frequencies which sequentially follow one another and each rise and fall again, the respective delays are selected differently and a function for determining the maximum value of the transfer functions is superimposed on the transfer functions of the corresponding filters.

8. Method according to Claim 6 or 7, **characterized in that** the respective delays are selected in such a ratio to one another that the numerator and denominator of the ratio are prime numbers or multiples of prime numbers.

9. Method according to Claim 8, **characterized in that** the respective delays are selected in such a manner that, in a series of prime numbers which directly follow one another, at least one further prime number lies between the prime number corresponding to the longest delay and the prime number corresponding to the next shorter delay.

10. Apparatus for the detection of objects within range cells by scanning the range cells by means of radar signals which are emitted in the direction of the range cells by means of a pulse radar, in particular an equivalent time sampling (ETS) pulse radar, are at least partially reflected by the objects, and are received and evaluated using the pulse radar, the apparatus having a digital filter for filtering the received signals as part of the evaluation in order to suppress stationary objects, **characterized in that** the digital filter has a variable delay.

11. Digital filter for use in an apparatus for the detection of objects within range cells by scanning the range cells by means of radar signals which are emitted in the direction of the range cells by means of a pulse radar, in particular an equivalent time sampling (ETS) pulse radar, are at least partially reflected by the objects, and are received and evaluated using the pulse radar, the digital filter filtering the received signals as part of the evaluation in order to suppress stationary objects, **characterized in that** the digital filter has a variable delay.

12. Storage element which stores a computer program which is executable on a computation device, in particular on a microprocessor or on a digital signal processor (DSP), and is suitable for carrying out a method according to one of Claims 1 to 9.

13. Computer program, **characterized in that** the computer program is suitable for carrying out a method according to one of Claims 1 to 9 when it is executed on a computation device, in particular on a microprocessor or on a digital signal processor (DSP).

14. Computer program according to Claim 13, **characterized in that** the computer program is stored on a storage element.

## Revendications

1. Procédé pour la détection d'objets à l'intérieur de cellules distance par balayage des cellules distance au moyen de signaux radar pulsés, qui sont émis en direction des cellules distance, sont réfléchis au moins en partie par les objets, sont reçus et analysés, dans lequel on soumet les signaux reçus à un filtrage dans le cadre de l'analyse visant à éliminer les objets immobiles, **caractérisé en ce que** l'on soumet les signaux reçus à un filtrage numérique avec des temps morts variables.

2. Procédé selon la revendication 1, **caractérisé en ce que** l'on fait varier des fréquences aveugles du filtrage numérique en fonction de la distance des objets détectés.

3. Procédé selon la revendication 2, **caractérisé en ce que** l'on choisit les fréquences aveugles de façon croissante à mesure que la distance des objets détectés augmente.

4. Procédé selon la revendication 2, **caractérisé en ce que** l'on choisit les fréquences aveugles de façon croissante à mesure que la distance des objets détectés augmente jusqu'à atteindre une valeur de distance prédéterminable et de nouveau de façon décroissante après l'expiration d'un temps mort prédéterminable.

5. Procédé selon la revendication 4, **caractérisé en ce que** l'on choisit les fréquences aveugles de façon croissante et décroissante en forme de trapèze.

6. Procédé selon la revendication 4 ou 5, **caractérisé en ce que**, avec plusieurs fréquences aveugles respectivement croissantes et de nouveau décroissantes se succédant de façon séquentielle, on choisit des temps morts respectifs différents et on superpose aux fonctions de transfert des filtres correspondants une fonction destinée à déterminer la valeur maximale des fonctions de transfert.

7. Procédé selon la revendication 6, **caractérisé en ce que**, avec trois fréquences aveugles respectivement croissantes et de nouveau décroissantes se succédant de façon séquentielle, on choisit des temps morts respectifs différents et on superpose aux fonctions de transfert des filtres correspondants une fonction destinée à déterminer la valeur maximale des fonctions de transfert.

8. Procédé selon la revendication 6 ou 7, **caractérisé en ce que** l'on choisit les temps morts respectifs dans un tel rapport l'un par rapport à l'autre que le numérateur et le dénominateur du rapport soient des nombres premiers ou des multiples de nombres premiers.

9. Procédé selon la revendication 8, **caractérisé en ce que** l'on choisit les temps morts respectifs de telle manière qu'il se trouve au moins un autre nombre premier, dans une série de nombres premiers se succédant immédiatement, entre le nombre premier correspondant au temps mort le plus long et le nombre premier correspondant au temps mort plus court suivant.

10. Dispositif pour la détection d'objets à l'intérieur de cellules distance par balayage des cellules distance au moyen de signaux radar, qui sont émis au moyen d'un appareil radar pulsé, en particulier d'un appareil radar pulsé à échantillonnage en temps équivalent, ETS, en direction des cellules distance, sont réfléchis au moins en partie par les objets, sont reçus et analysés au moyen de l'appareil radar pulsé, dans lequel le dispositif présente un filtre numérique pour filtrer les signaux reçus dans le cadre de l'analyse visant à éliminer les objets immobiles, **caractérisé en ce que** le filtre numérique possède un temps mort variable.

11. Filtre numérique à utiliser dans un dispositif pour la détection d'objets à l'intérieur de cellules distance par balayage des cellules distance au moyen de signaux radar, qui sont émis au moyen d'un appareil radar pulsé, en particulier d'un appareil radar pulsé à échantillonnage en temps équivalent, ETS, en direction des cellules distance, sont réfléchis au moins en partie par les objets, sont reçus et analysés au moyen de l'appareil radar pulsé, dans lequel le filtre numérique filtre les signaux reçus dans le cadre de l'analyse visant à éliminer les objets immobiles, **caractérisé en ce que** le filtre numérique possède un temps mort variable.

12. Elément de mémoire, dans lequel est mémorisé un programme informatique, qui peut être exécuté sur un ordinateur, en particulier sur un microprocesseur ou sur un processeur numérique de signaux (DSP), et qui convient pour la mise en oeuvre d'un procédé selon l'une quelconque des revendications 1 à 9.

13. Programme informatique, **caractérisé en ce que** le programme informatique convient pour la mise en oeuvre d'un procédé selon l'une quelconque des revendications 1 9, lorsqu'il est exécuté sur un ordinateur, en particulier sur un microprocesseur ou sur un processeur numérique de signaux (DSP).

14. Programme informatique selon la revendication 13, **caractérisé en ce que** le programme informatique est mémorisé sur un élément de mémoire.

Fig. 1

Fig. 2

EP 1 245 966 B1

V_objekt [m/s]

Fig. 3

f [Hz]

Fig. 4

EP 1 245 966 B1

Fig. 5

EP 1 245 966 B1

Fig. 6

f_doppler [Hz]

EP 1 245 966 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19919227